# EUROPEAN PATENT SPECIFICATION

(11) **EP 0 750 703 B1**
(45) Date of publication and mention of the grant of the patent: **03.12.1997**
(21) Application number: 95911414.1
(22) Date of filing: 17.03.1995
(51) Int. Cl.: E03B 1/04, E03D 5/00

(54) **WATER RECYCLING APPARATUS**
VORRICHTUNG ZUR WIEDERVERWENDUNG VON BRAUCHWASSER
APPAREIL DE RECYCLAGE DE L'EAU

(30) Priority: 17.03.1994 GB 9405273; 11.07.1994 GB 9413943
(43) Date of publication of application: 02.01.1997
(73) Proprietor: TRIPLE CROWN SECURITIES HOLDINGS LIMITED, Tunbridge Wells, Kent TN2 5PE (GB)
(72) Inventor: HUME, Shaun Alexander, 18 Hastings Road, Kent TN30 6XD (GB)
(74) Representative: Bankes, Stephen Charles Digby
(86) International application number: GB9500582
(87) International publication number: WO9525203

(56) References cited:
- DE-U- 9 207 910
- DE-U- 9 301 587
- GB-A- 1 476 221
- GB-A- 2 235 719
- GB-A- 2 249 121
- US-A- 4 283 802

## Description

The present invention relates to apparatus suitable for recycling wash water in a domestic environment.

In the average household approximately one third of water used is for flushing water closets. There is no necessity for such water to come directly from the mains water supply and waste water from sinks and baths and rinse water from dish and clothes washing machines could be used for such a purpose. In view of the rapidly rising costs of treating and supplying mains water for domestic consumption, and the fact that many properties now have a metered water supply it would be particularly desirable to provide a means by which domestic waste water could be recycled and used for flushing water closets. In order to provide a system which is acceptable to consumers it is important that an uninterrupted supply of water can be provided for flushing purposes. The system moreover must require a minimum of operator intervention. In order to provide an uninterrupted supply it is necessary to provide for the supply of recycled water to be supplemented by mains water to cover situations in which the supply of recycled water is inadequate for some reason. This may occur for instance if a large temporary increase in the demand for flushing water occurs. The supplementing with mains water must be achieved without operator intervention. Water recycling systems which go some way towards meeting these requirements are described in GB Patents 2,249,121 and 2,235,719 (on the former of which the precharacterising part of claim 1 is based). Both of these systems employ a low level collection tank from which water is pumped to a high level header tank or break tank. Recycled water flows by gravity from the break tank to water closet cisterns when required and a supply of fresh water is provided, via a ball cock mounted inside the tank, to top up the break tank when an inadequate quantity of recycled water is available. A conventional overflow pipe is provided to route water away from the break tank in the event of the level in the tank rising above a desired level. Should the overflow pipe become blocked for any reason there is a possibility that the level of recycled water in the tank will rise to such an extent that an outlet of the fresh water supply will become submerged. This in turn will lead to a possibility of contamination of the fresh water supply with germs or other undesirable agents which may be present in the recycled water. For this reason such break tanks are unlikely to comply with regulations in many countries.

US patent specification 4,283,802 discloses an example of a typical water closet cistern in which a conventional vertically disposed overflow duct is provided which projects upwardly from the bottom of the cistern to a point below a fresh water inlet aperture.

One object of the invention is to provide an apparatus which is suitable for incorporation in a waste water recycling system and which overcomes the above disadvantage.

Thus, according to the invention thereis provided a water recycling break tank apparatus including a tank, a recycled water inlet adapted to supply the tank with recycled water, a tank overflow, a fresh water supply with a tank water-level dependent first control means and a fresh water discharge aperture for discharging fresh water into the tank and a recycled water outlet the first control means being arranged to always maintain the recycled water outlet submerged, characterised in that the overflow is an unrestricted spillway overflow comprising an elongate aperture in the side of the tank or a weir region of reduced height in a sidewall of the tank and the fresh water discharge aperture is positioned above an invert of the overflow over which water from the tank can overflow.

The provision of an unrestricted spillway overflow in the form of a large aperture in the side of the tank or a weir region of reduced height in a tank side wall will ensure that recycled water in the tank will never have a level above the invert of the overflow. Positioning the fresh water discharge aperture above this invert level will accordingly prevent contamination of the fresh water. The use of a unrestricted overflow as opposed to a conventional piped overflow will eliminate the danger of overflow being prevented by blockage. Furthermore, the maintenance by the first control means of water level in the tank above the recycled water outlet will ensure that the tank will always be able to supply water for flushing purposes, regardless of the rate of supply of recycled water.

In order to keep any pump provided to supply the tank with recycled water in a primed condition preferably the first control means always maintains a discharge aperture of the recycled water inlet submerged. When this discharge aperture is in a lower region of the tank, in order that only little water need be present in the tank for this condition to be met, the recycled water discharge aperture is preferably located less than 20% of the tank's height from its bottom.

So as to reduce the amount of fresh water which flows into the tank during use, preferably the first control means allows fresh water to flow into the tank to maintain the recycled water outlet submerged but prevents such flow when water in the tank is below its working level. More preferably, such flow prevention occurs when the depth of water in the tank is any more than 20% and most preferably 10% of the tank's height. With such an arrangement demand for fresh water as a consequence of the lowering the level of water in the tank resulting from a single flush of a water closet can be completely avoided. As the apparatus is provided with an unrestricted overflow, (i.e. not a customary piped overflow) the apparatus preferably includes containment means such as a container in or above which the tank may be positioned which can act to collect overflow water and route it *via* a pipe to the exterior of a building in which the apparatus is located. Alternatively or in addition to such a container a conventional piped overflow may be provided below the invert level of the spillway overflow.

The tank may be supported above the container by a walled structure which can conveniently be used to accommodate and provide sound insulation for a pump connected to supply recycled water to the recycled water inlet. The pump may alternatively be located remotely from the tank and container.

In order to prevent the pump from rapidly on-off cycling or hunting the apparatus preferably includes second control means which causes the pump to start only when water in the tank is at a first low level and causes the pump to stop when water in the tank reaches a higher working level. The distance between these levels preferably represents at least 40% of the height of the tank so that in use a good circulation of water within the tank is brought about and the need for expensive chemical treatment of water in the tank can be avoided. Conveniently the second control means includes a float, the weight of which causes the second control means to start the pump when water is at the first level and the buoyancy of which causes the second control means to stop the pump when water reaches the higher working level.

In order to prevent actuation of the pump in circumstances in which supply of recycled water is not available, the second control means preferably includes an over-ride system for preventing pump actuation if one or more conditions are not met. Such conditions may include inadequate water in a reservoir from which the pump is supplied or the temperature of water connections to the pump being at or below freezing point.

When the apparatus is functioning so as to be replenished with recycled water it is desirable to provide the water with an additive which will act to disinfect the water and prevent an undesirable odour occurring.

Conversely, when the tank is only being replenished with mains water such addition is not necessary. Furthermore, with such apparatus it is desirable for a user to be alerted to the fact that the tank is only being replenished with mains water in order that the reason for this can be ascertained. Accordingly the break tank apparatus may conveniently be provided with a disinfectant or additive dispenser disposed with diffusion means positioned above the lower level to which the water is maintained when recycled water is not available.

With such an arrangement disinfectant will only be dispensed when the break tank is being replenished with recycled water.

A convenient, cheap type of dispenser comprises a container with diffusion apertures adjacent its lower end through which water in the break tank may pass so as to slowly dissolve solid disinfectant material located in the dispenser.

The disinfectant is preferably in the form of slow dissolving granules, cakes or tablets of disinfectant material such as those marketed under the registered trade mark Domestos.

Preferably, the disinfectant material also adds a colouration to the water. In this manner a user will be able to see clearly that water being supplied to a water closet system, for example, is recycled water, by the fact that it is coloured. Absence of colouration will immediately alert a user to the fact that mains rather than recycled water is being supplied.

The dispenser is preferably arranged with its diffusion means or apertures located substantially at the upper level to which the tank is normally maintained when supplied with recycled water. With such an arrangement the rate of addition of disinfectant by means of the solid disinfectant material dissolving can be kept low. The dispenser need not therefore be replenished more regularly than once every one or two years.

This manner of dispensing disinfectant or other additives to the recycled water may constitute a separate invention independently of the other features of the invention.

The invention also includes a water recycling system including the above apparatus in combination with a recycled water reservoir located below the apparatus connected by a pipe to an inlet of the pump. A one-way valve may be provided which prevents flow of water from the pump back into the reservoir so that the inlet of the pump remains flooded at all times.

The invention will now be described by way of example only with reference to the accompanying figures in which:
FIG. 1 shows a schematic representation of a domestic water recycling system including apparatus according to the invention;
FIG. 2 shows a partly schematic vertical section through the water recycling break tank apparatus shown in Fig. 1;
FIG. 3 shows a horizontal section on the line C-C of the apparatus shown in Fig. 2; and
FIG. 4 is a diagrammatic representation of features of the control means controlling the pump.
FIG. 5 shows a schematic vertical cross-section of an alternative system in accordance with the invention;
FIG. 6 is a vertical cross-section through a suitable disinfectant dispenser for use in the apparatus according to the invention; and
FIG. 7 is a vertical cross-section through an alternative disinfectant dispenser.

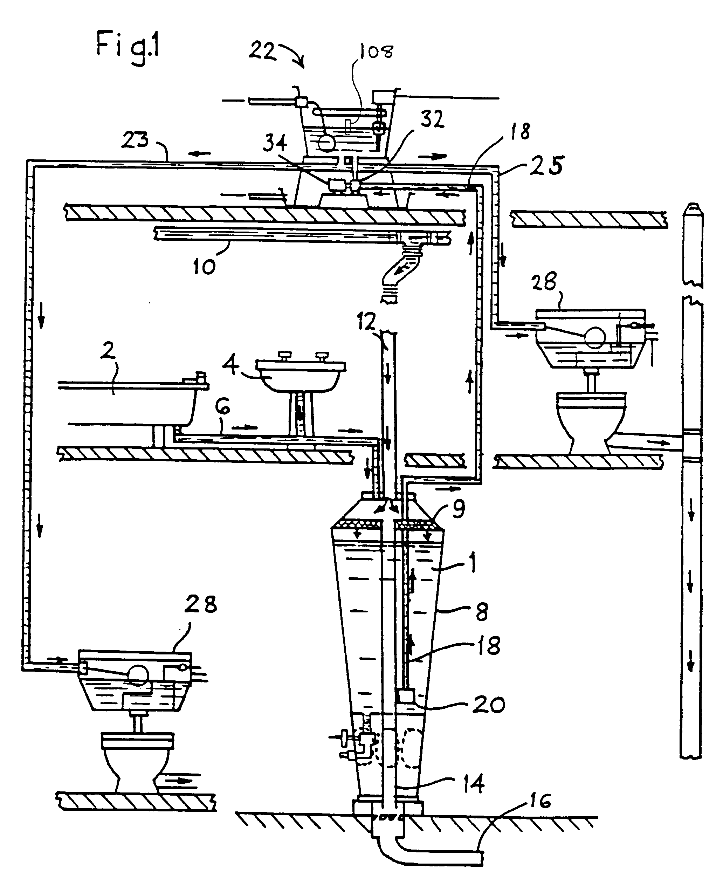

Figure 1 shows a schematic representation of a waste water recycling system installed in a typical house.

Waste water 1 from a bath 2 and a sink 4 is routed *via* pipes 6 to a reservoir 8 through a filter 9. Rain water from guttering 10 is also led to the reservoir *via* downpipe 12. Pumped rinse water from dish and clothes washing machines may also be routed to the reservoir. Should the reservoir become full, overflow *via* overflow pipe 14 into a drain 16 occurs. This process will backwash the filter 9 washing particles lodged therein down the drain 16.

A pipe 18 extends from a location near the bottom of reservoir 8 to a water recycling break tank apparatus 22 located in a roof void of the house. At the lower end of the pipe 18 a one-way valve 20 is located which acts to prevent water passing from the pipe into the reservoir 8.

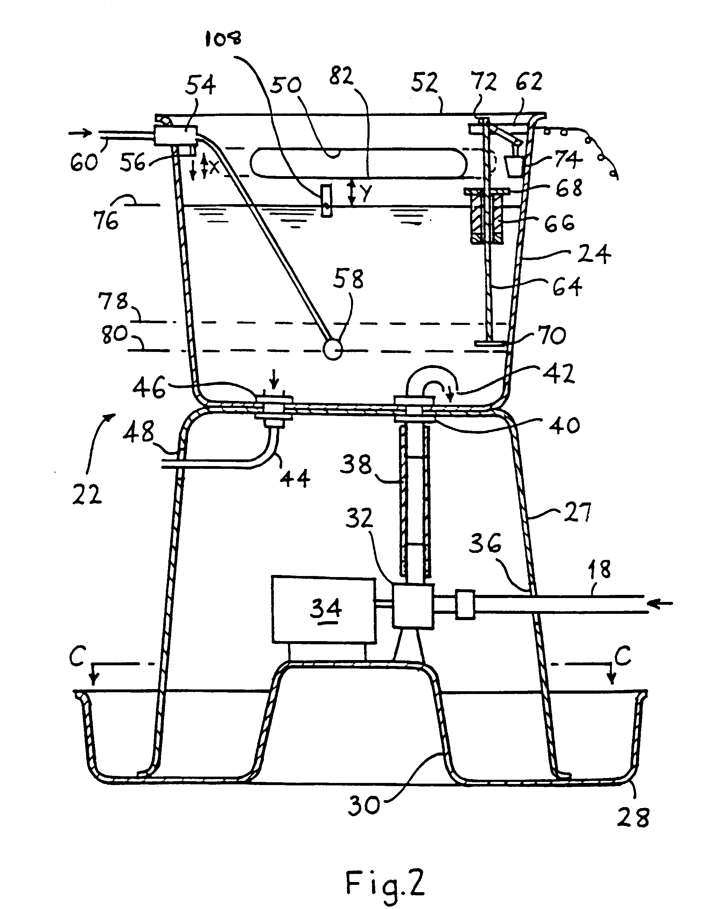

In a manner which will be described in more detail below with reference to Figure 2 waste water is distributed from the apparatus 22 *via* pipes 23 and 25 to water closet cisterns 28.

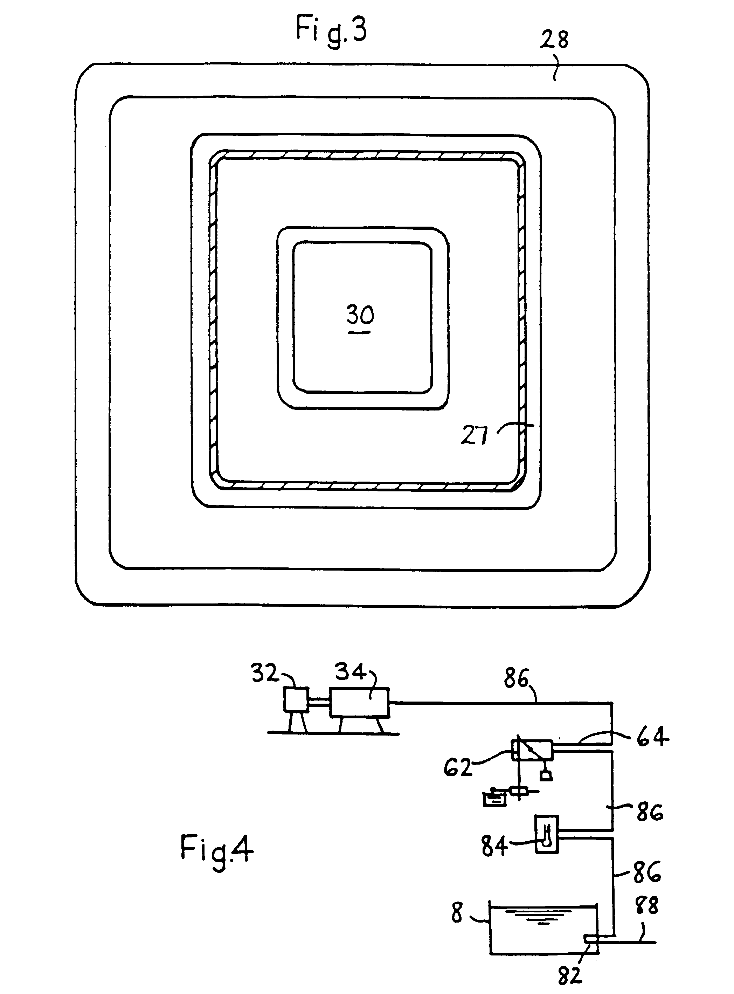

The apparatus includes a square tank 24 supported by walled support structure 27 located in an open square container or bund 28. In the centre of the container 28 a square mount 30 is provided to the top of which a self-bleeding centrifugal pump 32 is connected which is driven by a commutator motor 34. A horizontal cross-section of the container 28, mount 30 and support structure 26 on the line C-C in Figure 2 is shown in Figure 3.

The pipe 18, the lower end of which is positioned in the reservoir 8, passes through a first aperture 36 in the support structure 27 and is connected to an inlet of the pump 32. A second pipe 38, which is flexible, leads upwards from an outlet of the pump to a recycled water inlet fixture 40 having a discharge aperture 42 located close to the base of the tank 24.

A recycled water outlet fixture 46 is connected to the bottom of the tank 24 and leads into a third pipe 44 which passes through a second aperture 48 in the support structure and away from the apparatus. This third pipe 44 is connected to the pipes 24 and 26 discussed above which lead to the water closet cisterns.

In the side of the tank 24 near its upper edge 52 a large overflow slot 50 is provided.

On the left-hand side of the tank 24 as seen in Figure 2 a fresh water inlet 54 is provided with a discharge aperture 56 and an actuating float 58. The fresh water inlet is connected to the mains water supply by a pipe 60.

On the right-hand side of the tank 24 as seen in Figure 2 a float switch 62 is provided. The float switch 62 includes a depending rod 64 up and down which a weighted float 66 can travel between upper and lower stops 68 and 70. A switch actuating arm 72 is pivotally connected to the switch and is rotatably connected to the rod 64 adjacent one end and has a counterweight 74 at its other end.

The operation of the water recycling break tank apparatus will now be described with particular reference to first, second and third levels 76, 78 and 80 respectively which are shown in Figure 2.

Under rest conditions the tank 24 will be maintained with a water level at the first level 76 which is a distance Y of at least 22mm beneath the invert 82 of the overflow slot 50. In order to ensure that contamination of fresh water in the pipe 60 cannot occur, the discharge aperture 56 of the fresh water inlet fixture 54 is a distance X of at least 25mm above the slot invert 82. When a cistern in the house demands water it will flow to the cistern *via* the third pipe 44. The level of water will fall below the first level 76 and the float 66 will consequently fall also. It is not until the water in the tank reaches the second level 78 that the float 66 will come to rest on the bottom stop 70 of the rod 64, thus causing the arm 72 to pivot anticlockwise, as seen in Figure 2, and effect actuation of the motor 34 and pump 32. The pump 32 then draws water from the reservoir 8 through one-way valve 20, and pipe 18 and forces it through second pipe 38 and the inlet fixture 40 into the tank 24, thus raising the water level therein. Once the first level 76 is reached the float 66 comes into contact with the upper stop 68 on the rod 64 and causes the arm 72 to rotate clockwise, thus deactivating the motor 34 and pump 32. It should be noted that at no point in the above described sequence will fresh water enter the tank *via* the fresh water inlet 54.

Should the pump be unable to provide recycled water to the tank 24, the water will eventually fall below the lowest third level 80 at which point the float 58 will fall thus allowing fresh water to enter the tank from pipe 60 *via* the fresh water inlet 54. Once the water has risen to the third level 80 which is less than 100mm and preferably approximately 50mm from the bottom of the tank, the float 58 will cause inflow of fresh water to be cut off. The third level 80 is arranged to be above the outlet fixture 46 in order that a supply of water to the cisterns 28 can always be guaranteed and above the level of the inlet aperture 42 of the recycled water inlet fixture 40 in order that the pump 32 is always in a flooded condition (as water cannot run down the pipe 18 back to the reservoir 8 because of the one-way valve 20).

Control of the motor 34 may be dependent on factors such as the level of water in the reservoir 8 and the temperature of the pipe 18 supplying the pump. Figure 4 shows in diagrammatic form a control means suitable for controlling a flow of electricity to the motor 34 for driving the pump 32. Power is supplied *via* wire 88 to a water level sensor 82 located near the bottom of the reservoir 8. The sensor is connected in series *via* wires 86 to a temperature sensor 84 and the float switch 62. Only if (a) there is adequate water in the reservoir, (b) the temperature is above freezing and (c) the water in the tank 24 is at or below the second level 78 will the motor 34 be actuated.

The volume of water accommodated in the tank 24 between the first and second levels 76 and 78 is approximately 60% of the volume of water accommodated in the tank when filled to the first level 76, and represents the approximate volume of water demanded by a single flush of a typical water closet cistern.

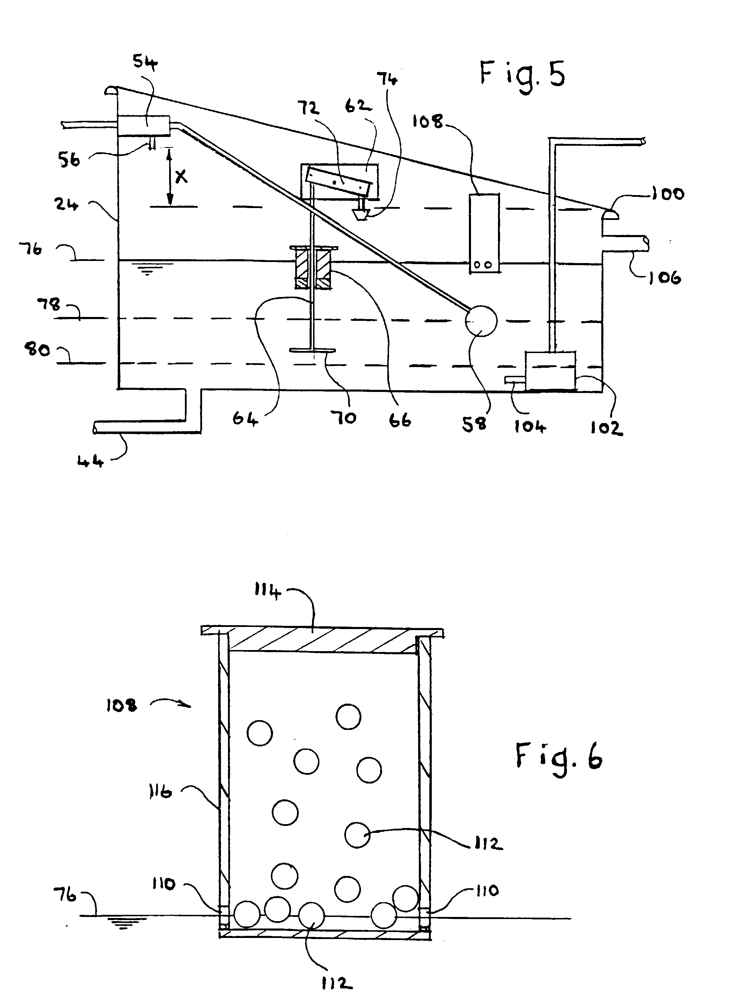

Figure 5 shows an alternative system in which like parts are referred to with like numerals. In this arrangement the overflow outlet is provided by a part 100 of the tank wall which is lower than other parts of the tank's upper edge. A submersible pump 102 is employed to pump recycled water into the tank and has an outlet 104 below the lowest water level 80. A conventional overflow pipe 106 is provided which will route overflow water away from the system unless the unlikely event of blockage of this pipe has occurred. Accordingly, the need to provide a bund surrounding the tank 24 can be avoided.

A disinfectant dispenser 108 which is shown in detail in Figure 6 is attached to a side wall of the tank 24. The dispenser has apertures 100 adjacent its lower end positioned at the upper water level 76 and is provided with coloured pellets 112 of disinfectant material. The dispenser 108 can initially be filled with such pellets 112 which will move down as pellets in the lower end of the dispenser are dissolved. Replenishment with extra pellets is possible by removal of a lid 114 from the cylindrical side wall 116.

Disinfectant and hence colouration will accordingly only be added to water in the tank when it is being replenished with recycled water and accordingly maintained with the water level at the upper level 76.

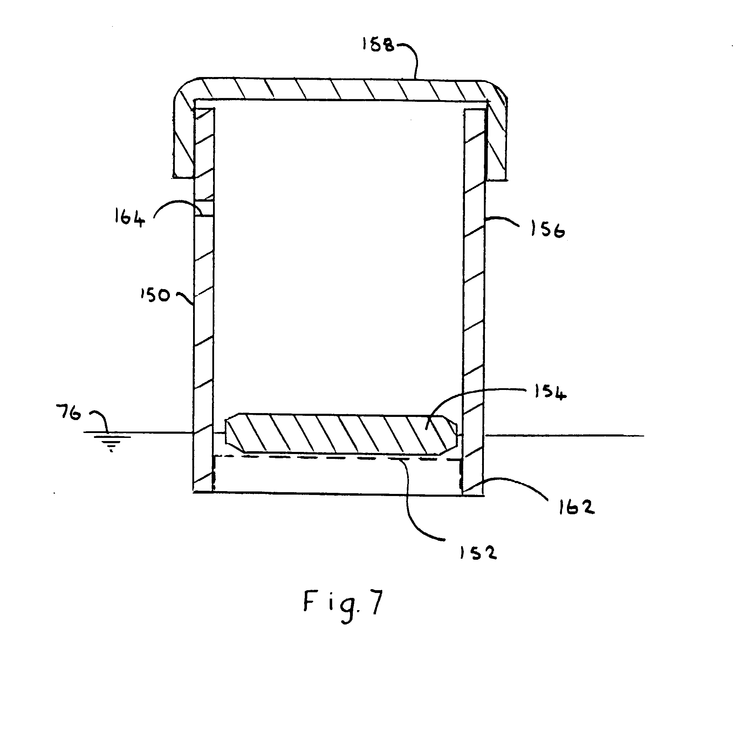

A vertical cross-section through an alternative construction of disinfectant dispenser is shown in Figure 7. The dispenser includes a cylindrical body 156 with an open lower end above which a mesh support 152 is fixed on which a tablet 154 of disinfectant is positioned. The lower part 162 of the body 156 prevents odour from the tablet 154 entering the atmosphere around the dispenser. A cap 158 seals the top of the body 156 and a vent aperture 164 is provided to prevent a build-up of pressure inside the body 156.

With either of the above dispensers the extent to which disinfectant is added to the liquid can be easily adjusted by mounting the dispenser so that it is vertically displaceable. By lowering the dispenser the rate at which disinfectant will be dissolved in the water in the tank will be increased.

## Claims

1. A water recycling break tank apparatus (22) including a tank (24), a recycled water inlet (40) adapted to supply the tank with recycled water, a tank overflow (50), a fresh water supply (54) with a tank water-level dependent first control means and a fresh water discharge aperture (56) for discharging fresh water into the tank (24) and a recycled water outlet (46), the first control means being arranged to always maintain the recycled water outlet (46) submerged, characterised in that the overflow (50) is an unrestricted spillway overflow comprising an elongate aperture in the side of the tank (24) or a weir region (100) of reduced height in a sidewall of the tank (24) and the fresh water discharge aperture (56) is positioned above an invert (82) of the overflow (50) over which water from the tank can overflow.

2. A break tank apparatus (22) according to claim 1 wherein the recycled water inlet (40) includes a discharge aperture which is located at less than 20% of the height of the tank (24) above its bottom.

3. A break tank apparatus (22) according to claim 1 or 2 wherein the first control means is arranged to allow fresh water into the tank to keep the recycled water outlet (46) submerged but to cut off the fresh water supply (54) when the depth of water in the tank is at any level higher than 20% of the tank's height above its base.

4. A break tank apparatus (22) according to any preceding claim wherein the tank (24) is positioned above a container (28) arranged to collect any overflow water from the tank (24) and route it to the exterior of a building in which the apparatus (22) is located.

5. A break tank apparatus (22) according to claim 4 wherein the tank (24) is supported above said container (28) by a walled structure (27) within which is located a pump (32) arranged to supply recycled water to the recycled water inlet (40).

6. A break tank apparatus (22) according to any preceding claim which includes a pump (32) arranged to supply recycled water to the recycled water inlet (40) and second control means (62) arranged to start the pump only when the water in the tank falls to a first low level (80) and to stop the pump when the water reaches a second higher level (76).

7. A break tank apparatus (22) according to claim 6 wherein the difference in height between said higher and lower levels (76, 80) represents at least 40% of the distance between the bottom of the tank (24) and the higher level.

8. A break tank apparatus according to claim 6 or claim 7 wherein said second control means (62) includes a float (66) the weight of which causes the second control means (62) to start the pump (32) when the water is at said first level (78) and the buoyancy of which causes the second control means (62) to stop the pump (32) when the water reaches said higher level (76).

9. A break tank apparatus according to any one of claims 6 to 8 wherein the second control means (62) includes an override system for preventing pump actuation when a supply of recycled water is not available.

10. A break tank apparatus (22) according to any one of claims 6 to 9 including a water additive dispenser (108) arranged to supply additive (112) to water in the tank (24) only when the level of water therein is substantially at the higher level (76).

11. A water recycling system comprising a break tank apparatus (22) according to any preceding claim and a recycled water reservoir (8) located below the break tank (24), a pump (32) being arranged to supply water from said reservoir (8) to the recycled water inlet (40) of the tank.

12. A water recycling system according to claim 11 wherein a one-way valve (20) is provided which prevents the flow of water from the pump back into the reservoir.

## Patentansprüche

1. Wasserwiederverwendungszwischentankvorrichtung (22), die einen Tank (24) einschliesst, einen Einlass (40) für wiederverwendetes Wasser, der den Tank mit wiederverwendetem Wasser beliefern kann, einen Tanküberlauf (50), einen Frischwasservorrat (54) mit einem von dem Tankwasserstand abhängigen ersten Steuermittel und einer Frischwasserentlassungsöffnung (56), um frisches Wasser in den Tank (24) zu entlassen, und einen Auslass (46) für wiederverwendetes Wasser, wobei das erste Steuermittel angeordnet ist, um den Auslass (46) für wiederverwendets Wasser immer eingetaucht zu halten, dadurch gekennzeichnet, dass der Überlauf (50) ein nicht eingeschränkter Abflusskanalüberlauf ist, der eine langgestreckte Öffnung in der Seite des Tanks (24) oder ein Wehrgebiet (100) mit verringerter Höhe in einer Seitenwand des Tanks (24) umfasst, und die Frischwasserentlassungsöffnung (56) über einer Sohle (82) des Überlaufs (50) angeordnet ist, über die Wasser von dem Tank überlaufen kann.

2. Zwischentankvorrichtung (22) nach Anspruch 1, in der der Einlass (40) für wiederverwendetes Wasser eine Entlassungsöffnung einschliesst, die auf weniger als 20% der Höhe des Tanks über seinem Boden untergebracht ist.

3. Zwischentankvorrichtung (22) nach Anspruch 1 oder 2, in der das erste Steuermittel angeordnet ist, um frischcs Wasser in den Tank zu lassen, um den Auslass (46) für wiederverwendetes Wasser eingetaucht zu halten, aber um den Frischwasservorrat (54) abzuscchneiden, wenn die Tiefe des Wassers in dem Tank auf irgendeiner Höhe ist, die höher als 20% der Höhe des Tanks über seinem Unterteil ist.

4. Zwischentankvorrichtung (22) nach einem der vorhergehenden Ansprüche, in der der Tank über einem Behälter (28) angeordnet ist, der angeordnet ist, um irgendwelches Überlaufwasser von dem Tank (24) zu sammeln und es zu dem Äusseren eines Gebäudes zu leiten, in dem die Vorrichtung (22) untergebracht ist.

5. Zwischentankvorrichtung (22) nach Anspruch 4, in der der Tank (24) von einer Wandstruktur (27) über dem Behälter (28) getragen wird, in welcher eine Pumpe (32) untergebracht ist, die angeordnet ist, um wiederverwendetes Wasser zu dem Einlass (40) für wiederverwendetes Wasser zu liefern.

6. Zwischentankvorrichtung (22) nach einem der vorhergehenden Ansprüche, die eine Pumpe (32) einschliesst, die angeordnet ist, um wiederverwendetes Wasser zu dem Einlass (40) für wiederverwendetes Wasser zu liefern, und ein zweites Steuermittel (62), das angeordnet ist, um die Pumpe nur dann anzulassen, wenn das Wasser in dem Tank auf einen ersten tiefen Stand (80) fällt, und die Pumpe anzuhalten, wenn das Wasser einen zweiten höheren Stand (76) erreicht.

7. Zwischentankvorrichtung (22) nach Anspruch 6, in der der Höhenunterschied zwischen den höheren und tieferen Ständen (76, 80) wenigstens 40% des Abstands zwischen dem Boden des Tanks (24) und dem höheren Stand darstellt.

8. Zwischentankvorrichtung nach Anspruch 6 oder 7, in der das zweite Steuermittel (62) einen Schwimmer (66) einschliesst, dessen Gewicht verursacht, dass das zweite Steuermittel (62) die Pumpe (32) anlässt, wenn das Wasser auf dem ersten Stand (78) ist, und dessen Auftrieb verursacht, dass das zweite Steuermittel (62) die Pumpe (32) anhält, wenn das Wasser den höheren Stand (76) erreicht.

9. Zwischentankvorrichtung nach einem der Ansprüche 6 bis 8, in der das zweite Steuermittel (62) ein Übersteuerungssystem einschliesst, um Pumpenbetätigung zu verhindern, wenn ein Vorrat von wiederverwendetem Wasser nicht verfügbar ist.

10. Zwischentankvorrichtung (22) nach einem der Ansprüche 6 bis 9, das einen Wasserzugabespender (108) einschliesst, der angeordnet ist, um nur dann eine Zugabe (112) zu dem Wasser zu machen, wenn der Wasserstand darin im wesentlichen auf dem höheren Stand (76) ist.

11. Wasserwiederverwendungssystem, das eine Zwischentankvorrichtung (22) nach einem der vorhergehenden Ansprüche umfasst und einen Speicher (8) für wiederverwendetes Wasser, der unter dem Zwischentank (24) untergebracht ist, wobei eine Pumpe (32) angeordnet ist, um Wasser von dem Speicher (8) zu dem Einlass (40) des Tanks für wiederverwendetes Wasser zu liefern.

12. Wasserwiederverwendungssystem nach Anspruch 11, in dem ein Einwegeventil (20) vorgesehen ist, das die Strömung von Wasser von der Pumpe zurück in den Speicher verhindert.

## Revendications

1. Appareil à réservoir intermédiaire à eau (22) comportant une cuve (24), une amenée d'eau recirculée (40) adaptée pour apporter l'eau recirculée au réservoir, un trop-plein de réservoir (50), une amenée d'eau fraîche (54) muni d'un premier moyen régulateur à commande définie par le niveau d'eau et un orifice de décharge d'eau fraîche (56) pour amener l'eau fraîche à la cuve (24) et un orifice d'eau recirculée (46), le premier moyen régulateur étant prévu pour toujours maintenir submergée l'orifice d'eau recirculée (46), caractérisé en ce que le trop-plein (50) est un conduit trop-plein sans restriction comportant un orifice allongé dans le côté de la cuve (24) ou un zone de déversoir (100) de hauteur restreinte dans une paroi latérale de la cuve (24) et l'orifice de décharge d'eau fraîche (56) est situé au dessus d'une inversion (82) du trop-plein (50) à partir de laquelle l'eau est en mesure de s'écouler à partir de la cuve.

2. Appareil à réservoir intermédiaire (22) selon la revendication 1 suivant laquelle l'orifice d'eau recirculée (40) comporte un orifice de décharge qui est situé en position inférieure à 20% de la cote de hauteur de la cuve (24) mesurée depuis le fond de ladite cuve.

3. Appareil à réservoir intermédiaire (22) selon la revendication 1 ou 2, suivant laquelle le premier robinet régulateur est agencé pour permettre l'amenée d'eau fraîche dans la cuve pour maintenir submergée l'orifice d'eau recirculée (46) mai pour condamner l'amenée d'eau fraîche (54) lorsque la profondeur de l'eau dans la cuve se trouve à tout niveau supérieur à 20% de la hauteur de la cuve à partir du fond.

4. Appareil à réservoir intermédiaire (22) selon l'une ou l'autre des revendications précédentes, suivant laquelle la cuve (24) est installée au dessus d'un conteneur agencé pour recueillir l'eau de trop-plein provenant de la cuve (24) et pour la diriger vers l'extérieur d'un bâtiment dans lequel se trouve l'appareil (22).

5. Appareil à réservoir intermédiaire (22) selon la revendication 4, suivant laquelle la cuve (24) est soutenue au dessus dudit conteneur (28) par une structure en maçonnerie (27) dans laquelle est située une pompe (32) agencée pour amener l'eau recirculée à l'orifice (40) d'eau recirculée.

6. Appareil à réservoir intermédiaire (22) selon l'une ou l'autre des revendications précédentes, comportant une pompe (32) agencée pour amener l'eau recirculée à l'amenée d'eau recirculée (40) et un deuxième robinet régulateur (62) agencé pour démarrer la pompe exclusivement lorsque l'eau dans la cuve rejoint un premier niveau bas (80) et pour arrêter la pompe dès que l'eau rejoint un deuxième niveau plus élevé (76).

7. Appareil à réservoir intermédiaire (22) selon la revendication 6, suivant laquelle le différentiel en hauteur desdits niveaux supérieur et inférieur (76,80) représente au minimum 40% de la cote entre le fond de la cuve (24) et le niveau le plus élevé.

8. Appareil à réservoir intermédiaire (22) selon la revendication 6 ou la revendication 7, suivant laquelle le deuxième robinet régulateur (62) comporte un flotteur (66) dont le poids assure le démarrage par le deuxième robinet régulateur (62) de la pompe (32) lorsque l'eau se trouve audit premier niveau (78) et dont le pouvoir flottant commande le deuxième robinet régulateur (62) de façon à arrêter la pompe (32) lorsque l'eau rejoint ledit niveau supérieur (76).

9. Appareil à réservoir intermédiaire selon l'une ou l'autre des revendications 6 à 8, suivant laquelle le deuxième robinet régulateur (62) prévoit un système de commande prioritaire condamnant le fonctionnement de la pompe en l'absence d'un amenée d'eau recyclée.

10. Appareil à réservoir intermédiaire (22) selon l'une ou l'autre des revendications 6 à 9, y compris un distributeur d'additif à l'eau (108 agencé pour fournir l'additif (112) à l'eau du réservoir (24) exclusivement lorsque son niveau d'eau se situe à un niveau essentiellement au niveau supérieur (76).

11. Système de recirculation d'eau comportant un appareil à réservoir intermédiaire (22) selon l'une ou l'autre des revendications précédentes et un réservoir d'eau recirculée (8) situé sous le réservoir intermédiaire (24), une pompe étant agencée pour amener l'eau depuis ledit réservoir (8) à l'orifice d'entrée recirculée (40) du réservoir.

12. Système de recirculation d'eau selon la revendication 11, suivant laquelle une soupape unidirectionnelle (20) est prévue pour condamner le retour au réservoir du débit d'eau provenant de la pompe.
